# EUROPÄISCHE PATENTSCHRIFT

(11) **EP 4 094 066 B1**
(45) Veröffentlichungstag und Bekanntmachung des Hinweises auf die Patenterteilung: **14.02.2024**
(21) Anmeldenummer: 22703907.0
(22) Anmeldetag: 25.01.2022
(51) Int. Cl.: G01N 21/21, G01J 4/04

(54) **VERFAHREN ZUM BETRIEB EINER POLARISATIONS-MESSVORRICHTUNG UND POLARISATIONS-MESSVORRICHTUNG**
METHOD FOR OPERATING A POLARIZATION MEASURING DEVICE, AND POLARIZATION MEASURING DEVICE
PROCÉDÉ DE FONCTIONNEMENT D'UN DISPOSITIF DE MESURE DE POLARISATION ET DISPOSITIF DE MESURE DE POLARISATION

(30) Priorität: 13.04.2021 DE 102021109215
(43) Veröffentlichungstag der Anmeldung: 30.11.2022
(73) Patentinhaber: Park Systems GmbH, 37079 Göttingen (DE)
(72) Erfinder: MIRHAMED, Arash, 37127 Dransfeld (DE); QUAST, Jan-Henrik, 37085 Göttingen (DE); DUWE, Matthias, 34131 Kassel (DE); SEVERINS, Daniel, 37075 Göttingen (DE)
(74) Vertreter: Schneider, Peter Christian
(86) Internationale Anmeldenummer: PCT/EP2022/051613
(87) Internationale Veröffentlichungsnummer: WO 2022/218579

(56) Entgegenhaltungen:
- US-A- 5 877 859
- US-B2- 8 405 830
- WOOLLAM JOHN A ET AL: "Overview of variable-angle spectroscopic ellipsometry (VASE): I. Basic theory and typical applications", PROCEEDINGS OF SPIE; [PROCEEDINGS OF SPIE ISSN 0277-786X VOLUME 10524], SPIE, US, Bd. 10294, 19. Juli 1999 (1999-07-19), Seiten 1029402-1029402, XP060094734, DOI: 10.1117/12.351660 ISBN: 978-1-5106-1533-5

## Beschreibung

### Gebiet der Erfindung

Die Erfindung betrifft ein Verfahren zum Betrieb einer Polarisations-Messvorrichtung, bei dem Licht mit einem vorgegebenen Eingangs-Polarisationszustand zum Zwecke einer potentiell polarisationsverändernden Wechselwirkung mit einer Probe zu dieser und von ihr durch einen polarisationsselektiven Analysator und wenigstens anteilig zu einem Intensitäts-Detektor geleitet wird, wobei
- im Rahmen einer Polarisationsmodulation ein Relativwinkel zwischen dem Ausgangs-Polarisationszustand des die Probe verlassenden Lichtes und dem Analysator sowie
- im Rahmen einer Spektralmodulation die Wellenlänge des zum Detektor gelangenden Lichtanteils

variiert werden
und wobei mittels des Detektors nacheinander eine Mehrzahl von Intensitätsmessungen bei unterschiedlichen Konstellationen aus Polarisations- und Spektralmodulations-Zuständen durchgeführt und entsprechende Intensitätswerte zusammen mit die korrespondierende Konstellation repräsentierenden Polarisations- und Spektralwerten gespeichert werden.

Die Erfindung betrifft weiter eine Polarisations-Messvorrichtung, umfassend
- eine Lichtquelle zur Erzeugung von zur Wechselwirkung mit einer Probe bestimmten Lichtes,
- einen Probenhalter zum Positionieren der Probe im Strahlengang des Lichtes,
- einen Intensitäts-Detektor zum Detektieren einer Intensität des Lichtes nach dessen Wechselwirkung mit der Probe,
- einen Polarisationszustandsgenerator, der zwischen der Lichtquelle und der Probe angeordnet und geeignet ist, dem Licht einen vorgegebenen Eingangs-Polarisationszustand zu geben,
- einen polarisationssensitiven Analysator, der zwischen der Probe und dem Intensitäts-Detektor angeordnet und geeignet ist, Lichtanteile vorgegebener Polarisationszustände zu selektieren, d. h. bestimmte Lichtanteile in Abhängigkeit von ihrem Polarisationszustand passieren zu lassen und die übrigen bspw. durch Absorption oder reflektive oder diffraktive Ablenkung zu unterdrücken,
- einen Spektralmodulator, der geeignet ist, die Wellenlänge des zum Detektor gelangenden Lichtes zu variieren,
- einen Polarisationsmodulator, der geeignet ist, einen Relativwinkel zwischen dem Ausgangs-Polarisationszustand des die Probe verlassenden Lichtes und dem Analysator zu variieren, und
- eine Steuereinheit, die geeignet ist, den Intensitäts-Detektor, den Polarisationsmodulator und den Spektralmodulator gemäß einem vorgegebenen Betriebsverfahren anzusteuern.

### Stand der Technik

Derartige Polarisations-Messvorrichtungen sind als sogenannte Polarimeter oder Ellipsometer allgemein bekannt. Gleiches gilt für die grundsätzlich Verfahren zu ihrem Betrieb.

US Patent Nr. 5,877,859 offenbart ein Ellipsometer zur Probenanalyse in einem großen Wellenlängenbereich. Ein rotierender Kompensator bewirkt Phasenverzögerungen des Polarisationszustands des Lichtstrahls. Ein hinter einem Analysator angeordneter Detektor misst die Lichtintensität als Funktion des Kompensatorwinkels und der Wellenlänge.

Zweck derartiger Polarisations-Messungen ist es, bestimmte Eigenschaften einer Probe, zu ermitteln, indem die durch eine Wechselwirkung der Probe mit einem wohldefinierten Lichtstrahl, dem Messstrahl, verursachte Änderung des Polarisationszustandes des Messstrahls analysiert wird. Die Wechselwirkung zwischen dem Messstrahl und der Probe kann dabei in Transmission oder Reflexion erfolgen. Im Fall der Transmission spricht man von Polarimetrie bzw. Polarimetern; im Fall der Reflexion spricht man von Ellipsometrie bzw. Ellipsometern. Beide Varianten sollen hier gemeinsam als Polarisations-Messung bzw. Polarisations-Messvorrichtungen angesprochen werden.

Da Polarisation von Licht bekanntlich keine unmittelbar messbare Größe ist, erfolgt die Messung mittelbar mittels eines Intensitäts-Detektors, dem ein polarisationssensitiver Analysator vorgeschaltet ist. Dieser zeichnet sich dadurch aus, dass er lediglich von seiner Winkelstellung abhängig vorgegebene Polarisationszustände bzw. Lichtanteile solchen Polarisationszustandes passieren lässt und andere unterdrückt. Je nach Relativstellung des Polarisationszustandes des auf den Analysator fallenden Lichtes zur Ausrichtung des Analysators verändert sich die den Analysator passierende und zum Detektor gelangende Intensität.

Im Rahmen einer polarimetrischen oder ellipsometrischen Messung ist allerdings der Polarisationszustand des von der Probe ausgehenden und auf den Analysator fallenden Lichtes gerade nicht bekannt; bekannt ist lediglich der typischerweise explizit einstellbare Eingangs-Polarisationszustand, mit welchem das Licht auf die Probe trifft. Die in diesem Zusammenhang üblicherweise verwendete Bezeichnung "Polarisationszustandsgenerator" (PSG: Polarisation State Generator) ist rein funktional zu verstehen. Entsprechende Geräte können ganz unterschiedlich ausgestaltet sein und im Extremfall, wenn eine Lichtquelle selbst bereits den gewünschten Eingangs-Polarisationszustand liefert, auch ganz entfallen.

Um die Auswirkungen der Wechselwirkung mit der Probe auf die Polarisation des Messstrahls zu ermitteln, ist es erforderlich, mehrere Intensitätsmessungen bei unterschiedlichen Relativeinstellungen von Analysator und Polarisationszustandsgenerator durchzuführen. Das entsprechende Variieren der Relativeinstellung wird hier rein funktional als "Polarisationsmodulation" bezeichnet. Die entsprechende, diese Funktion ausführende Vorrichtung wird hier - ebenfalls rein funktional - als "Polarisationsmodulator" bezeichnet. Je nach konkretem experimentellem Aufbau kann die Polarisationsmodulation z.B. durch ein Variieren der PSG-Einstellung und/oder der Analysator-Einstellung erfolgen, die dann zusätzlich zu Ihrer eigentlichen Primärfunktion auch die Funktion des Polarisationsmodulators erfüllen.

Nach unterschiedlichen, dem Fachmann bekannten Ansätzen lassen sich aus solchermaßen erzielten Intensitäts-Messdaten (und der Kenntnis der korrespondierenden Polarisationsmodulations-Zustände) mathematische Zielgrößen, wie etwa die ellipsometrischen Parameter Delta und Psi, die sog. Mueller-Matrix und/oder die sog. Jones-Matrix berechnen. Unter Zugrundelegung eines geeignet parametrisierten Modells der Probe lassen sich dann aus diesen mathematischen Zielgrößen durch dem Fachmann bekannte Fehlerminimierungsverfahren Rückschlüsse auf bestimmte Probeneigenschaften ziehen.

Es ist bekannt, dass die Auswirkungen der Wechselwirkung mit der Probe auf den Polarisationszustand des Messstrahls stark von dessen Wellenlänge abhängen können. Für eine umfassende Untersuchung der Probe ist es daher üblich, das oben skizzierte Verfahren bei unterschiedlichen Wellenlängen durchzuführen und der Auswertung ein entsprechend komplexes Probenmodell zugrunde zu legen. Der Begriff "Wellenlänge" wird in diesem Zusammenhang hier in fachüblicher Verkürzung für ein im konkreten Einzelfall angemessen schmal gewähltes Spektralband verwendet. Um eine gewünschte Wellenlänge einzustellen, kann beispielsweise aus dem breitbandigen Spektrum einer Lichtquelle mittels eines Monochromators oder eines variierbaren Filters das gewünschte Spektralband vor dem Auftreffen auf die Probe und vorzugsweise sogar vor einem ggf. apparativ realisierten PSG, oder hinter der Probe und vorzugsweise auch hinter dem Analysator, in jedem Fall aber vor dem Eintritt in den Detektor selektiert werden. Alternativ kann eine durchstimmbare Lichtquelle Einsatz finden. Unabhängig von der konkreten technischen Umsetzung wird ein solches Variieren der Wellenlänge hier rein funktional als "Spektralmodulation" bezeichnet. Die entsprechende, diese Funktion ausführende Vorrichtung wird hier - ebenfalls rein funktional - als "Spektralmodulator" bezeichnet.

Die hier erfindungsgegenständliche Polarisations-Messung umfasst mehrere Intensitäts-Messungen bei unterschiedlich eingestellten Polarisationsmodulations-Zuständen einerseits und unterschiedlich eingestellten Spektralmodulations-Zuständen andererseits, d.h. bei unterschiedlichen Konstellationen von Polarisations- und Spektralmodulations-Zuständen.

Der Intensitäts-Detektor kann auf unterschiedliche Weise realisiert sein. Beispielsweise sind im Rahmen der vorliegenden Erfindung sowohl im Wesentlichen punktförmige Fotodioden, eindimensionale Zeilenkameras oder zweidimensionale Bilddetektoren einsetzbar. Insbesondere letztere finden Einsatz bei der im Kontext der vorliegenden Erfindung besonders profitierenden, bildgebenden Ellipsometrie, die etwa - sofern hinreichende Arbeitsgeschwindigkeiten erzielt würden - bei der Qualitätskontrolle in der Halbleiterindustrie eine große Rolle spielen könnten, wo Schichtdicke und/oder Brechungsindex sehr dünner Schichten bzw. Beschichtungen oder vergleichbar kleiner Strukturen über vergleichsweise große Flächen präzise vermessen bzw. überprüft werden müssen. Bei einem derartigen Einsatz ist typischerweise auch eine die Probe auf den Bilddetektor abbildende Abbildungsoptik vorgesehen.

Ein häufig verwendeter ellipsometrischer Aufbau entspricht dem sog. PCSA-Konzept: der von einer Lichtquelle erzeugte Messstrahl passiert einen aus einem als Linearpolarisationsfilter ausgebildeten Polarisator und einem nachfolgenden Kompensator (engl.: Compensator; typischerweise ein Lambda-Viertel-Plättchen) aufgebauten PSG, wird an der Probe (engl.: Sample), auf die er unter schrägem Einfallswinkel auftrifft, reflektiert und passiert sodann den ebenfalls als Linearpolarisationsfilter ausgebildeten Analysator, bevor er auf den Detektor fällt. Die Polarisationsmodulation erfolgt dabei meist nach dem sog. RC-Prinzip, bei dem der Kompensator um die optische Achse rotiert wird (engl.: Rotating Compensator). Dies erfolgt bei den in der industriellen Qualitätssicherung eingesetzten, automatisierten Verfahren motorisch.

Gerade im industriellen Umfeld und insbesondere bei der Qualitätskontrolle spielt die Prozessgeschwindigkeit eine bedeutende Rolle. Bislang ist es üblich, zur Durchführung einer spektral auflösenden Polarisations-Messung zunächst bei einer eingestellten Wellenlänge schrittweise die für die Ermittlung der im Einzelfall benötigten polarimetrischen oder ellipsometrischen Zielgrößen erforderliche Anzahl unterschiedlicher Polarisationsmodulations-Zustände einzustellen, entsprechende Intensitätsmesswerte aufzunehmen und sodann dieselbe Polarisations-Messung mit denselben eingestellten Polarisationsmodulations-Zuständen bei weiteren, nacheinander eingestellten Wellenlängen zu wiederholen. Dieser Ansatz ist zeitaufwändig. Eine Beschleunigung durch eine schnellere Schrittabfolge der Polarisationsmodulation, insbesondere der Kompensator-Rotation verlangt stärkere und teurere Motoren und birgt aufgrund der stärkeren Beschleunigungen beim Anfahren und Stoppen des Kompensators die Gefahr von Vibrationen, die sich insbesondere bei bildgebenden Verfahren nachteilig auswirken können. Daher konnten sich trotz ihres prinzipiell großen Potentials Polarisations-Messungen, insbesondere bildgebende ellipsometrische Messungen, in der industriellen Qualitätskontrolle noch nicht flächendeckend etablieren.

Aus der US 5 920 393 A sind ein Verfahren und ein Gerät zur Identifizierung bestimmter Komponenten in einer Probe bekannt. Im Grunde handelt es sich dabei um eine um polarimetrische Aspekte erweiterte Spektralanalyse, bei der gezielt nach "Mustern" gesucht wird, die für in der Probe vermutete Komponenten spezifisch sind. Ausgangspunkt ist die Erkenntnis, dass bestimmten Substanzen spezifische optische Eigenschaften, insbesondere Absorption, Reflexion und optische Aktivität, d. h. ein Vermögen, die Polarisationseigenschaften von einfallendem Licht zu verändern, aufweisen, die hinsichtlich ihrer Abhängigkeit von der Substanzkonzentration in der Probe und der Wellenlänge des einfallenden Lichtes bekannt sind. Eine Probe, in der eine solche Substanz als eine Komponente vermutet wird, wird mit Licht bestrahlt, dessen Eigenschaften, insbesondere Wellenlänge, Amplitude und Polarisation, zeitlich individuell variiert werden; passend dazu werden die Eigenschaften eines Detektors für das von der Probe emittierte Licht variiert. Bestrahlungs- und Detektions-"Muster" werden dabei speziell auf die in der Probe vermuteten Substanzen zugeschnitten, sodass deren spezifischer Einfluss auf das einfallende Licht erkannt und die fragliche Substanz als Komponente der Probe identifiziert werden kann. Spezielle "Muster" dieser Art gibt die genannte Druckschrift nicht an, sondern verweist nur auf die grundsätzlich unbeschränkte Anzahl denkbarer "Muster" und die Notwendigkeit ihres individuellen Zuschnitts auf die jeweils als Komponenten in der Probe vermuteten Substanzen.

### Aufgabenstellung

Es ist die Aufgabe der vorliegenden Erfindung, ein Polarisations-Messverfahren und eine entsprechende Vorrichtung zur Verfügung zu stellen, mittels welcher kürzere Messzeiten ohne oder zumindest ohne wesentlichen Qualitätsverlust ermöglicht werden.

### Darlegung der Erfindung

Diese Aufgabe wird in Verbindung mit den Merkmalen des Oberbegriffs von Anspruch 1 dadurch gelöst, dass die Polarisations- und die Spektralmodulation gleichzeitig und kontinuierlich durchgeführt werden, wobei während einer einzelnen, monotonen Variation des Polarisationsmodulations-Zustandes der Spektralmodulations-Zustand mehrfach periodisch variiert wird und während jeder Spektralmodulations-Periode nacheinander eine Mehrzahl von Intensitätsmessungen durchgeführt werden.

Die Aufgabe wird weiter in Verbindung mit den Merkmalen des Oberbegriffs von Anspruch 14 dadurch gelöst, dass die Steuereinheit eingerichtet ist, den Intensitäts-Detektor, den Polarisationsmodulator und den Spektralmodulator gemäß dem erfindungsgemäßen Verfahren anzusteuern.

Bevorzugte Ausführungsformen sind Gegenstand der abhängigen Ansprüche.

Die Erfindung basiert auf der Erkenntnis, dass es zur Ermittlung der polarimetrischen bzw. ellipsometrischen Zielgrößen lediglich darauf ankommt, dass eine je nach interessierender Zielgröße vorbestimmte Mindestanzahl von Intensitätsmessungen bei unterschiedlichen Polarisationsmodulations-Zuständen durchgeführt wird, die möglichst weit über das verfügbare Intervall nicht-redundanter Polarisationsmodulations-Zustände verteilt sind. Auf die konkrete Wahl der im Einzelfall eingestellten Polarisationsmodulations-Zustände kommt es hingegen nicht an. Im Fall eines rotierbaren Kompensators als Polarisationsmodulator entspricht das verfügbare Zustandsintervall einer Rotation von 180°. Sollen innerhalb dieses Intervalls z.B. sechs Messungen durchgeführt werden, ist es für die Berechnung der polarimetrischen oder ellipsometrischen Zielgrößen unbeachtlich, ob die einzelnen Intensitätsmessungen z.B. bei 30°, 62°, 87°, 122°, 149° und 178°, bei 2°, 29°, 58°, 92°, 121° und 151° oder bei ähnlichen Abfolgen von Polarisationsmodulations-Zuständen durchgeführt werden. Entscheidend für die Ermittlung der Zielgrößen ist lediglich, dass die vorgegebene Mindestanzahl erreicht wird und die Relation der einzelnen Polarisationsmodulations-Zustände zueinander bekannt ist.

Diese Erkenntnis wird von den Erfindern dahingehend ausgenutzt, dass die für unterschiedliche Wellenlängen berechneten Zielgrößen auf Basis unterschiedlicher Sätze von Polarisationsmodulations-Zuständen ermittelt werden. Dabei durchfährt der Polarisationsmodulator das ihm zur Verfügung stehende Zustandsintervall lediglich ein Mal. Währenddessen ändert sich aber die Wellenlänge des Messstrahls (zumindest seines bis zum Detektor gelangenden Anteils) mehrfach periodisch und zwar mindestens (vorzugsweise genau) so oft, wie es der Mindestanzahl von Messpunkten zur Berechnung der gewünschten Zielgrößen entspricht. Zeitlich zwischen den einzelnen Intensitätsmessungen für eine bestimmte Wellenlänge werden die Intensitätsmessungen für die übrigen gewünschten Wellenlängen durchgeführt. Den z.B. bei "rot", "gelb", "grün" und "blau" berechneten Zielgrößen liegen dann Intensitätsmessungen bei unterschiedlichen, zueinander versetzten Sätzen von Polarisationsmodulations-Zuständen zugrunde. Mit anderen Worten wird also die Zeit, die der Polarisationsmodulator benötigt, um für eine bestimmte Wellenlänge von einer Mess-Zustandseinstellung zur nächsten zu gelangen, genutzt, um je eine Intensitätsmessung für jede der anderen interessierenden Wellenlängen durchzuführen. Dabei wird von dem üblicherweise apparativ vorgegebenen Szenario ausgegangen, dass die Integrationszeit des Intensitäts-Detektors sehr kurz ist gegenüber der Zeit, die der Polarisationsmodulator für eine Durchstimmung benötigt, und auch kurz gegenüber einer Periode der Spektralmodulation. Dann nämlich wirkt sich die durch die kontinuierliche Durchstimmung von Spektral- und Polarisationsmodulator erzeugte Verschmierung oder Verbreiterung des Spektral- bzw. Polarisationszustandes während der Intensitätsmessung praktisch nicht auf die Messqualität aus. Der Fachmann wird diese Spektral- bzw. Polarisations-"Unschärfe" durch entsprechende Wahl der Modulationsgeschwindigkeiten und der Detektor-Integrationszeit an die Erfordernisse des Einzelfalls anzupassen wissen bzw. ohne größeren Aufwand experimentell herausfinden können.

Die Konsequenz dieses erfindungsgemäßen Ansatzes ist eine deutliche Beschleunigung des Messvorgangs insgesamt und eine Reduzierung von Vibrationen aufgrund der kontinuierlichen statt schrittweisen Bewegung des Polarisationsmodulators. Letzteres kommt insbesondere der Qualität bildgebender ellipsometrischer Messungen zugute, die, wie oben bereits erwähnt, insbesondere in der Halbleiterindustrie von Interesse ist, wo auch die generelle Messungsbeschleunigung bei der Qualitätssicherung von besonders großem Wert ist.

Vorzugsweise folgen die während jeder Spektralmodulations-Periode durchgeführten Intensitätsmessungen unmittelbar aufeinander. "Unmittelbar" bedeutet in diesem Zusammenhang mit der apparativ vorgegebenen Höchstgeschwindigkeit. Es soll also günstigerweise keinen Verzug zwischen den einzelnen Intensitätsmessungen, beispielsweise wegen Wartens auf ein Trigger-Signal, geben. Vielmehr soll eine Intensitätsmessung so bald wie apparativ möglich auf die vorangehende Messung folgen, d. h. der Intensitäts-Detektor soll "durchlaufen", sodass während der gegebenen Zeiten eine maximale Anzahl an Intensitäts-Messungen aufgenommen werden kann.

Die Integrationszeit, die jeder Intensitätsmessung zugrunde liegt, kann dabei in Abhängigkeit von der jeweils eingestellten Wellenlänge gesteuert werden. Hierdurch können Dispersionseffekte kompensiert werden. Beispielsweise ist es möglich, dass die Ausgangsintensität des Spektralmodulators wellenlängenabhängig ist. Ebenso kann die Sensitivität des Intensitäts-Detektors wellenlängenabhängig sein. Selbst der Analysator kann eine wellenlängenabhängige Durchlass-Dämpfung zeigen. Sind derartige Effekte bekannt, kann mittels einer entsprechenden, wellenlängenabhängigen Ansteuerung der Detektor-Integrationszeit eine gute Kompensation geschaffen werden. Alternativ ist es allerdings auch möglich, dass die jeder Intensitätsmessung zugrundeliegende Integrationszeit konstant, d. h. bei allen Messungen dieselbe ist.

Die Variation der Wellenlänge innerhalb jeder Spektralmodulations-Periode erfolgt vorzugsweise monoton, insbesondere linear. In dem besonders bevorzugten, letztgenannten Fall ergibt sich im Rahmen der Spektralmodulation ein sägezahnförmiger Wellenlängenverlauf. Die zeitliche Abfolge der einzelnen Intensitäts-Messungen führt dann stets zum gleichen spektralen Abstand der aufeinanderfolgenden Intensitäts-Messungen.

Als besonders günstig hat sich herausgestellt, wenn die Zeitspanne, über welche die monotone Variation des Polarisations-Zustandes erfolgt, einem ganzzahligen Vielfachen der Spektralmodulations-Periode entspricht. Damit fällt die "erste" Wellenlänge, die im Rahmen der Spektralmodulation durchfahren wird, auf die Start-Einstellung des Polarisationsmodulators und die Endstellung des Polarisationsmodulators fällt auf die "letzte" Wellenlänge, die im Rahmen der Spektralmodulation durchfahren wird. Dazwischen wird die Wellenlänge mehrfach periodisch durchgestimmt, bevorzugt genauso viele Male, wie es der Mindestanzahl der zur Ermittlung der Zielgrößen erforderlichen Anzahl von Polarisationsmodulations-Zuständen entspricht.

Bei einer im Hinblick auf die Messgeschwindigkeit optimalen Auslegung fällt der Anfang jeder Spektralmodulations-Periode mit dem Beginn einer Integrationszeit des Intensitäts-Detektors zusammen und das Ende jeder Spektralmodulations-Periode fällt mit dem Ende eines Intensitäts-Detektor-Integrationsintervalls zusammen, wobei innerhalb jeder Spektralmodulations-Periode exakt so viele Intensitätsmessungen durchgeführt werden, wie es der Anzahl unterschiedlicher Wellenlängen entspricht, bei denen die Zielgrößen ermittelt werden sollen. Bei einer solchen Konfiguration nämlich wird lediglich die zwingend notwendige Mindestanzahl von Messwerten ohne jeden Zeitverzug dazwischen aufgenommen. Insbesondere in Fällen, in denen aufgrund hinreichender Lichtstärken nur sehr kurze Integrationszeiten benötigt werden, können während einer Spektralmodulations-Periode auch mehr Intensitäts-Messungen als zwingend erforderlich aufgenommen werden. "Überschüssige" Messungen können verworfen oder anderweitig genutzt werden.

Je länger die Integrationszeiten im Verhältnis zur Spektralmodulations-Periode sind, desto wesentlicher wird eine irgendwie geartete Synchronisierung. Bei einer Ausführungsform der Erfindung ist vorgesehen, dass die Polarisationsmodulation, die Spektralmodulation und die Intensitätsmessungen mechatronisch synchronisiert erfolgen. Vorzugsweise gibt dabei die Abfolge von Intensitätsmessungen den Grundtakt vor. Die Spektralmodulation wird so angesteuert, dass ihre Periode einem ganzzahligen Vielfachen des Integrationstaktes entspricht. Die Polarisationsmodulation wird ihrerseits so angesteuert, dass die zur Durchstimmung des Polarisationsintervalls benötigte Zeit einem ganzzahligen Vielfachen der Spektralmodulations-Periode entspricht. Je nach Ausführungsform ist dabei zu beachten, dass der von den Integrationszeiten vorgegebene Grundtakt wellenlängenabhängig variieren kann. Bei dieser Art der synchronisierten Ansteuerung aller Komponenten lässt sich die jeweilige Konstellation aus Spektral- und Polarisationsmodulations-Zustand durch einfaches Abzählen ermitteln.

Bei einer alternativen Ausführungsform erfolgt lediglich eine grobe Ansteuerungs-Synchronisierung, indem die einzelnen Komponenten (Intensitäts-Detektor, Polarisationsmodulator, Spektralmodulator) nur grob in der oben skizzierten Weise voreingestellt, dann aber "frei" laufen gelassen werden. Dabei kann es vorgesehen sein, dass ein für den jeweils eingestellten Polarisationsmodulations-Zustand repräsentativer Polarisations-Einstellwert und/oder ein für den jeweils eingestellten Spektralmodulations-Zustand repräsentativer Spektral-Einstellwert kontinuierlich gemessen und in die den Intensitätsmessungen jeweils zugeordneten und zusammen mit ihnen zu speichernden Polarisations- bzw. Spektralwerte umgerechnet werden. Mit anderen Worten erfolgt keine exakt synchronisierte Ansteuerung der Komponenten; es wird vielmehr für jede Intensitätsmessung die aktuelle Einstellung des Polarisations- bzw. Spektralmodulators gemessen und hieraus die jeder Intensitätsmessung zugeordnete Polarisations/Spektral-Konstellation ermittelt und gespeichert.

Im oben erstgenannten Fall ist eine sehr präzise und technisch aufwändige Ansteuerung der Komponenten erforderlich. Im zweiten Fall ist hingegen eine ebenfalls technisch komplexe, sehr präzise Messung der jeweils aktuellen Einstellung erforderlich. In der Praxis wird sich möglicherweise ein Mischsystem als optimal erweisen, bei dem eine gute aber suboptimal synchronisierte Ansteuerung von einer guten aber ebenfalls suboptimalen Zustandsmessung der Komponenten begleitet und jeweils nachjustiert wird.

Bevorzugt ist vorgesehen, dass die Polarisationsmodulation mittels eines Polarisationsmodulators durchgeführt wird, der im Strahlengang vor oder hinter der Probe angeordnet und durch einen ersten Stellmotor verstellbar ist. Insbesondere kann der Polarisationsmodulator als ein im Strahlengang zwischen der Lichtquelle und der Probe positionierten Paar aus einem Polarisator und einem durch den ersten Stellmotor rotierbaren Kompensator ausgebildet sein. In jedem Fall lässt sich eine solche Konfiguration ausnutzen, indem der Polarisations-Einstellwert ein für die Stellung des ersten Stellmotors repräsentativer Positionswert ist. Mit anderen Worten muss also nicht die Stellung des Polarisationsmodulators direkt gemessen werden. Es genügt, die jeweilige Position des zu seiner Einstellung genutzten Stellmotors zu messen. Stellmotoren mit einem entsprechenden Ausgang, an dem ihre aktuelle Stellung ausgelesen werden kann, sind dem Fachmann bekannt und am Markt erhältlich.

In analoger Weise kann vorgesehen sein, dass die Spektralmodulation mittels eines Spektralmodulators durchgeführt wird, der im Strahlengang vor oder hinter der Probe angeordnet und durch einen zweiten Stellmotor verstellbar ist. Dies kann ausgenutzt werden, indem der Spektral-Einstellwert ein für die Stellung des zweiten Stellmotors repräsentativer Positionswert ist. Zur weiteren Erläuterung wird analog auf das oben gesagte verwiesen.

Weitere Einzelheiten und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung einer bevorzugten Ausführungsform eines bildgebenden Ellipsometers, mittels dessen das erfindungsgemäße Verfahren durchführbar ist,
- Figur 2:: eine schematische Darstellung des erfindungsgemäßen Verfahrensablaufs sowie
- Figur 3:: eine weitere schematische Darstellung des erfindungsgemäßen Verfahrensablaufs.

### Beschreibung bevorzugter Ausführungsformen

Gleiche Bezugszeichen in den Figuren deuten auf gleiche oder analoge Elemente hin.

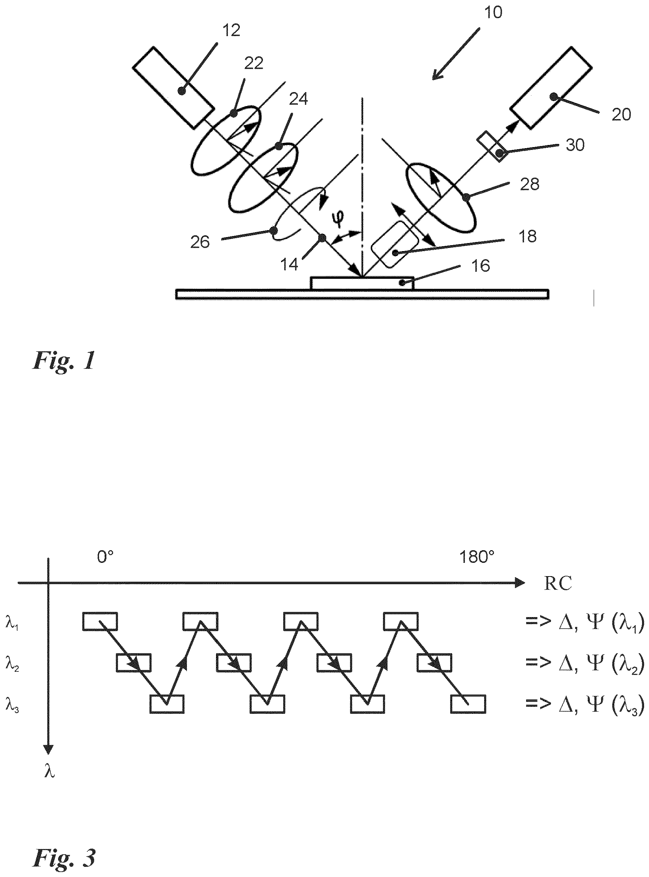

Figur 1 zeigt in stark schematisierter Darstellung ein im Grunde bekanntes abbildendes Ellipsometer, welches nach dem Prinzip des rotierenden Kompensators (RC-Prinzip) betreibbar ist. Von einer Lichtquelle 12 wird ein Messstrahl 14 unter einem Einfallswinkel ϕ auf eine Probe 16 gesendet und von dieser durch eine Abbildungsoptik 18 auf einen bildgebenden Detektor 20 reflektiert. Auf seinem Weg von der Lichtquelle 12 zur Probe 16 passiert der Messstrahl 14 einen (Linear-) Polarisator 22 und einen diesem nachgeschalteten Kompensator 24, die gemeinsam als Polarisationszustandsgenerator (PSG) wirken. Der Polarisator 22 kann dabei als ein Linearpolarisationsfilter ausgebildet sein. Der Kompensator 24 kann als ein λ-Viertel-Plättchen ausgestaltet sein, mittels dessen die senkrecht und parallel zur Einfallsebene polarisierten Lichtanteile gegeneinander phasenverschoben werden. Es resultiert eine in der Regel elliptische Polarisation des Messstrahls 14. Durch Rotation des Kompensators 24 um die optische Achse, d.h. die Strahlrichtung des Messstrahls 14, können Elliptizität und Achsorientierung (Winkelstellung) der Polarisation des Messstrahls 14 und damit dessen Polarisationszustand, insbesondere der Eingangs-Polarisationszustand, mit dem der Messstrahl 14 auf die Probe 16 trifft, variiert werden. Dies ist durch den Rotationspfeil 26 in Figur 1 angedeutet.

Der vom Messstrahl 14 beleuchtete Teil der Probe 16 wird mittels der Abbildungsoptik 18 auf den bildgebenden Intensitäts-Detektor 20 abgebildet. Dabei passiert sein Licht einen Analysator 28, der als ein (Linear-) Polarisationsfilter ausgebildet sein kann. Der Analysator 28 lässt entsprechend seiner Ausrichtung nur bestimmte Polarisationskomponenten des Messstrahls 14 passieren, während andere unterdrückt werden. Weiter passiert der Messstrahl bei der dargestellten Ausführungsform zwischen der Probe 16 und dem bildgebenden Intensitäts-Detektor 20 einen verstellbaren Spektralfilter 30, der nur - entsprechend seiner Einstellung - Lichtanteile ausgewählter Wellenlängen passieren lässt und andere Lichtanteile unterdrückt oder so weit ablenkt, dass sie nicht auf den Intensitäts-Detektor 20 fallen. Anstelle des im Detektionsteil des Strahlengangs positionierten Spektralfilters 30 kann dieser oder ein äquivalenter Spektralvariator, z. B. ein Monochromator, im Beleuchtungsteil des Strahlengangs angeordnet sein. Die in der Praxis bevorzugte Ausführungsform umfasst tatsächlich einen zwischen der Lichtquelle 12 und dem PSG 22/24 angeordneten Monochromator. Die Darstellung des Spektralfilters 30 im Detektionsstrahlengang in Figur 1 dient allein der besseren Übersichtlichkeit.

Im Rahmen der Durchführung des erfindungsgemäßen Verfahrens wird der Kompensator 24 von einer Anfangsstellung kontinuierlich bis in eine Endstellung rotiert. Hierdurch ändert sich der Eingangs-Polarisationszustand, mit dem der Messstrahl 14 auf die Probe 16 fällt entsprechend. Entsprechend ändert sich auch der Ausgangs-Polarisationszustand, mit dem der Messstrahl 14 die Probe 16 verlässt und mit dem Analysator 28 wechselwirkt. Die vom Detektor 20 detektierte Intensität des auf ihn auftreffenden Lichtanteils variiert also mit der Winkellage des Kompensators 24 und zwar periodisch mit einer Periode von 180° bezogen auf die Winkelstellung des Kompensators 24. Dies bedeutet, dass die Verstellung des Kompensators 24 während eines Durchgangs des erfindungsgemäßen Verfahrens auf maximal 180° beschränkt werden kann, wie dies bei der bevorzugten Ausführungsform auch tatsächlich der Fall ist.

Während einer solchen, vergleichsweise langsamen Polaritätsmodulation wird erfindungsgemäß mehrfach eine ebenfalls kontinuierliche Modulation der Wellenlänge des auf den Detektor 20 auftreffenden Lichtanteils durchgeführt, beispielsweise durch entsprechend mehrfache Variation des Spektralfilters 30 oder eines äquivalenten Spektralmodulators.

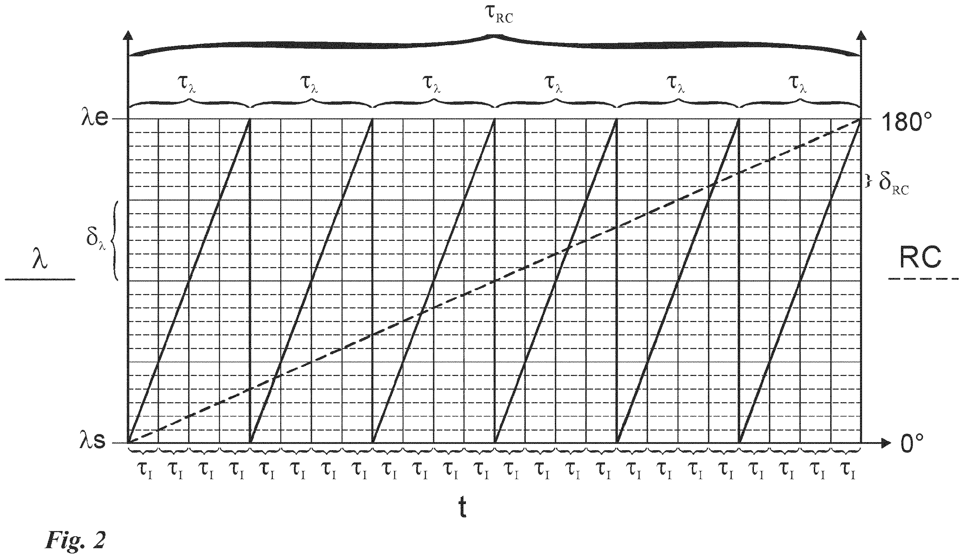

Der zeitliche Ablauf des erfindungsgemäßen Verfahrens ist in Figur 2 schematisch und beispielhaft dargestellt. Mit einer Periode von τ_{rc} wird der Kompensator 24 um 180° rotiert. Währenddessen wird die Wellenlänge λ mehrfach, bei der gezeigten Ausführungsform sechs Mal zwischen einer Startwellenlänge λₛ und einer Endwellenlänge λₑ durchgestimmt. Bei der dargestellten, bevorzugten Ausführungsform erfolgt die Durchstimmung sägezahnförmig, d.h. während einer Spektralmodulationsperiode τ_{λ} wird die am Spektralmodulator eingestellte Wellenlänge linear verändert, um am Periodenende möglichst instantan in den Ausgangszustand zurückzuspringen. Entsprechende Stelleinrichtungen, beispielsweise ein motorisch betriebenes Gitter eines Monochromators, sind dem Fachmann bekannt. Parallel zu dieser Polarisations- und Spektralmodulation erfolgt eine getaktete Intensitätsmessung mittels des Detektors 20. Bei der gezeigten Ausführungsform erfolgt die Intensitätsmessung mit konstanten Integrationszeiten τ_{I}.

Während eines Integrationsintervalls τ_{I} ändert sich die Winkelstellung des Kompensators 24 um einen Winkelbetrag δ_{RC} ; die Wellenlänge ändert sich um einen Wellenlängenbetrag δ_{λ}. Der entsprechenden Intensitätsmessung kann dann eine Konstellation aus Polsarisations- und Spektral-Zustand zugeordnet werden, die beispielsweise als Mittelwert des jeweiligen Polarisations- bzw. Spektralintervalls δ_{RC} bzw. δ_{λ} mit entsprechender Bandbreite ("Unschärfe") angesehen werden kann.

Figur 3 zeigt in einer Polarisations-/Wellenlängen-Ebene die Positionen der einzelnen Intensitätsmessungen, wobei die durchgezogene Pfeillinie die zeitliche Abfolge der Intensitätsmessungen darstellt. Es sei darauf hingewiesen, dass die Darstellung von Figur 3 aus Gründen der Übersichtlichkeit lediglich die Intensitätsmessungen bei vier unterschiedlichen Polarisations- und drei unterschiedlichen Spektral-Intervallen zeigt (ein gemäß dem Schema von Figur 2 durchgeführtes Verfahren würde zu Intensitätsmessungen bei sechs unterschiedlichen Polarisations- und vier unterschiedlichen Spektralintervallen führen).

Aus dem Schema von Figur 3 ist erkennbar, dass sich aufgrund des erfindungsgemäßen Verfahrens sowohl der Spektral- als auch der Polarisationszustand von Intensitätsmessung zu Intensitätsmessung ändert, im Ergebnis aber für drei festgelegte Wellenlängen jeweils vier Intensitätsmessungen bei unterschiedlichen, im Wesentlichen gleich beabstandeten Polarisationszuständen aufgenommen werden. Für jede Wellenlänge können also mit gleicher Genauigkeit vorbestimmte polarimetrische oder ellipsometrische Zielgrößen (im gezeigten Beispiel die ellipsometrischen Parameter Δ und Ψ) bestimmt werden. Die jeweils notwendige Anzahl an Messpunkten pro Wellenlänge ist, wie dem Fachmann bekannt, abhängig von den jeweils interessierenden Zielgrößen und dem konkreten apparativen Aufbau. Wie aus Figur 2 erkennbar, gibt es bei der Datenaufnahme jedoch keine "Totzeiten". Vielmehr läuft der Intensitäts-Detektor mit seiner apparativ vorgegebenen Höchstgeschwindigkeit, sodass die Messung mit maximaler Effizienz in der theoretisch höchstmöglichen Geschwindigkeit durchgeführt wird. Dabei werden aufgrund der nur einmaligen, langsamen und kontinuierlichen Variation des Kompensators 28 keine die Bildaufnahmequalität des Detektors 22 störenden Vibrationen eingeführt. Die resultierenden, bildgebend-ellipsometrischen Messergebnisse sind also nicht nur schneller sondern auch von höherer Qualität und Genauigkeit als dies im Stand der Technik bislang möglich war.

Bei der in Figur 2 dargestellten Ausführungsform sind die Spektralmodulation, die Polarisationsmodulation und die Intensitätsmessungen zeitlich derart aufeinander abgestimmt, dass eine Spektralperiode τ_{λ} einem ganzzahligen Vielfachen der Integrationszeit des Detektors 20 τ_{I} entspricht und die Polarisationsperiode τ_{RC} einem ganzzahligen Vielfachen der Spektralperiode τ_{λ} entspricht. Diese Synchronisation kann durch entsprechend synchronisierte Ansteuerung der einzelnen apparativen Komponenten erfolgen. Alternativ kann auch vorgesehen sein, dass die Laufgeschwindigkeit der einzelnen Komponenten entsprechend voreingestellt ist und ihre jeweilige Einstellung überwacht und gemessen wird, sodass die Positionen der einzelnen Intensitätsmessungen in der Polarisations-/Wellenlängen-Ebene (vgl. Figur 3) nachträglich bestimmt werden können. In der Praxis wird sich wahrscheinlich eine Kombination dieser Ansätze durchsetzen, bei dem eine grobe mechatronische Synchronisierung, d.h. eine synchronisierte Ansteuerung erfolgt und während der Verfahrensdurchführung durch parallel aufgenommene Positions-Messwerte korrigiert wird.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist das erfindungsgemäße Verfahren sowohl im polarimetrischen als auch im ellipsometrischen Kontext einsetzbar. Die jeweils zur Bestimmung ausgewählten polarimetrischen bzw. ellipsometrischen Zielgrößen stellen ebenfalls keine Beschränkung des Verfahrens dar. Die Anzahl der aufzunehmenden Intensitätsmessungen ergibt sich in für den Fachmann erkennbarer Weise aus der Wahl der gesuchten Zielgrößen und dem konkreten apparativen Aufbau, insbesondere der apparativen Natur des Polarisationsmodulators. In Bezug auf die konkrete apparative Gestaltung der Modulatoren ist der Fachmann selbstverständlich nicht auf die hier als bevorzugt beschriebenen Ausführungsformen mit motorisch angetriebenen, mechanischen Stellelementen beschränkt. Bereits jetzt sind ihm elektro-optische, magneto-optische, akusto-optische und andere Vorrichtungen bekannt, die sich als funktionale Polarisations- bzw. Spektralmodulatoren einsetzen lassen. Auch künftig noch zu ersinnende Vorrichtungen werden im Rahmen der vorliegenden Erfindung nutzbar sein. Analoges gilt für die konkrete Detektionstechnik.

### Bezugszeichenliste

- 10: bildgebendes Ellipsometer
- 12: Lichtquelle
- 14: Messstrahl
- 16: Probe
- 18: Abbildungsoptik
- 20: Intensitäts-Detektor
- 22: Polarisator
- 24: Kompensator
- 26: Rotationspfeil
- 28: Analysator
- 30: Spektralfilter
- τ_{I}: Integrationszeit
- τ_{RC}: Polarisationsmodulation-Periode
- δ_{RC}: Polarisationsintervall
- τ_{λ}: Spektralmodulations-Periode
- δ_{λ}: Spektralintervall

## Patentansprüche

1. Verfahren zum Betrieb einer Polarisations-Messvorrichtung (10), bei dem Licht (14) mit einem vorgegebenen Eingangs-Polarisationszustand zum Zwecke einer potentiell polarisationsverändernden Wechselwirkung mit einer Probe (16) zu dieser und von ihr durch einen polarisationsselektiven Analysator (28) und wenigstens anteilig zu einem Intensitäts-Detektor (20) geleitet wird, wobei
- im Rahmen einer Polarisationsmodulation ein Relativwinkel zwischen dem Ausgangs-Polarisationszustand des die Probe (14) verlassenden Lichtes (14) und dem Analysator (28) sowie
- im Rahmen einer Spektralmodulation die Wellenlänge des zum Intensitäts-Detektor (20) gelangenden Lichtes (14)
variiert werden
und wobei mittels des Intensitäts-Detektors (20) nacheinander eine Mehrzahl von Intensitätsmessungen bei unterschiedlichen Konstellationen aus Polarisations- und Spektralmodulations-Zuständen durchgeführt und entsprechende Intensitätswerte zusammen mit die korrespondierende Konstellation repräsentierenden Polarisations- und Spektralwerten gespeichert werden,
**dadurch gekennzeichnet,**
**dass** die Polarisations- und die Spektralmodulation gleichzeitig und kontinuierlich durchgeführt werden, wobei während einer einzelnen, monotonen Variation des Polarisationsmodulations-Zustandes der Spektralmodulations-Zustand mehrfach periodisch variiert wird und während jeder Spektralmodulations-Periode (τ_{λ}) nacheinander eine Mehrzahl von Intensitätsmessungen durchgeführt werden.

2. Verfahren nach Anspruch 1,
**dadurch gekennzeichnet,**
**dass** die während jeder Spektralmodulations-Periode (τ_{λ}) durchgeführten Intensitätsmessungen unmittelbar aufeinander folgen.

3. Verfahren nach einem der vorangehenden Ansprüche,
**dadurch gekennzeichnet,**
**dass** die jeder Intensitätsmessung zugrundeliegende Integrationszeit in Abhängigkeit von der jeweils eingestellten Wellenlänge gesteuert wird.

4. Verfahren nach einem der Ansprüche 1 bis 2,
**dadurch gekennzeichnet,**
**dass** die jeder Intensitätsmessung zugrundeliegende Integrationszeit konstant ist.

5. Verfahren nach einem der vorangehenden Ansprüche,
**dadurch gekennzeichnet,**
**dass** die Variation der Wellenlänge innerhalb jeder Spektralmodulations-Periode (τ_{λ}) monoton, insbesondere linear, erfolgt.

6. Verfahren nach einem der vorangehenden Ansprüche,
**dadurch gekennzeichnet,**
**dass** die Zeitspanne (τ_{RC}), über welche die monotone Variation des Polarisationsmodulations-Zustandes erfolgt, einem ganzzahligen Vielfachen der Spektralmodulations-Periode (τ_{λ}) entspricht.

7. Verfahren nach einem der vorangehenden Ansprüche,
**dadurch gekennzeichnet,**
**dass** die Polarisationsmodulation, die Spektralmodulation und die Intensitätsmessungen mechatronisch synchronisiert erfolgen.

8. Verfahren nach einem der vorangehenden Ansprüche,
**dadurch gekennzeichnet,**
**dass** ein für den jeweils eingestellten Polarisationsmodulations-Zustand repräsentativer Polarisations-Einstellwert und/oder ein für den jeweils eingestellten Spektralmodulations-Zustand repräsentativer Spektral-Einstellwert kontinuierlich gemessen und in die den Intensitätsmessungen jeweils zugeordneten und zusammen mit ihnen zu speichernden Polarisations- bzw. Spektralwerte umgerechnet werden.

9. Verfahren nach einem der vorangehenden Ansprüche,
**dadurch gekennzeichnet,**
**dass** die Polarisationsmodulation mittels eines Polarisationsmodulators durchgeführt wird, der im Strahlengang vor oder hinter der Probe (14) angeordnet und durch einen ersten Stellmotor verstellbar ist.

10. Verfahren nach Anspruch 9,
**dadurch gekennzeichnet,**
**dass** der Polarisationsmodulator als ein im Strahlengang zwischen der Lichtquelle und der Probe positioniertes Paar aus einem Polarisator (22) und einem durch den ersten Stellmotor rotierbaren Kompensator (24) ausgebildet ist.

11. Verfahren nach Anspruch 8 und einem der Ansprüche 9 bis 10,
**dadurch gekennzeichnet,**
**dass** der Polarisations-Einstellwert ein für die Stellung des ersten Stellmotors repräsentativer Positionswert ist.

12. Verfahren nach einem der vorangehenden Ansprüche,
**dadurch gekennzeichnet,**
**dass** die Spektralmodulation mittels eines Spektralmodulators durchgeführt wird, der im Strahlengang vor oder hinter der Probe angeordnet und durch einen zweiten Stellmotor verstellbar ist.

13. Verfahren nach Anspruch 12, soweit rückbezogen auf Anspruch 8,
**dadurch gekennzeichnet,**
**dass** der Spektral-Einstellwert ein für die Stellung des zweiten Stellmotors repräsentativer Positionswert ist.

14. Polarisations-Messvorrichtung (10), umfassend
- eine Lichtquelle (12) zur Erzeugung von zur Wechselwirkung mit einer Probe (16) bestimmten Lichtes (16),
- einen Probenhalter zum Positionieren der Probe (16) im Strahlengang des Lichtes (14),
- einen Intensitäts-Detektor (20) zum Detektieren einer Intensität des Lichtes (14) nach dessen Wechselwirkung mit der Probe (16),
- einen Polarisationszustandsgenerator, der zwischen der Lichtquelle (12) und der Probe (14) angeordnet und geeignet ist, dem Licht (14) einen vorgegebenen Eingangs-Polarisationszustand zu geben,
- einen polarisationssensitiven Analysator (28), der zwischen der Probe (16) und dem Intensitäts-Detektor (20) angeordnet und geeignet ist, Lichtanteile vorgegebener Polarisationszustände zu selektieren,
- einen Spektralmodulator (30), der geeignet ist, die Wellenlänge des zum Detektor (20) gelangenden Lichtes (14) zu variieren,
- einen Polarisationsmodulator (24), der geeignet ist, einen Relativwinkel zwischen dem Ausgangs-Polarisationszustand des die Probe (16) verlassenden Lichtes (14) und dem Analysator (28) zu variieren, und
- eine Steuereinheit, die geeignet ist, den Intensitäts-Detektor (20), den Polarisationsmodulator (24) und den Spektralmodulator (30) gemäß einem vorgegebenen Betriebsverfahren anzusteuern,
**dadurch gekennzeichnet,**
**dass** die Steuereinheit eingerichtet ist, den Intensitäts-Detektor (20), den Polarisationsmodulator (24) und den Spektralmodulator (30) gemäß dem Verfahren nach einem der Ansprüche 1 bis 11 anzusteuern.

## Claims

1. A method of operating a polarization measuring device (10), wherein light (14) having a predetermined input polarization state is passed to a sample (16) for the purpose of a potentially polarization changing interaction therewith and is passed from the sample through a polarization selective analyzer (28) and at least partially to an intensity detector (20), wherein
- within the framework of a polarization modulation, a relative angle between the output polarization state of the light (14) emanating from the sample (14) and the analyzer (28) is varied, and
- within the framework of a spectral modulation, the wavelength of the light (14) reaching the intensity detector (20) is varied,
and wherein by means of the intensity detector (20) a plurality of intensity measurements are successively performed at different constellations of polarization and spectral modulation states and corresponding intensity values are stored together with polarization and spectral values representing the corresponding constellation,
**characterized in that**
the polarization modulation and the spectral modulation are performed simultaneously and continuously, wherein during a single, monotonic variation of the polarization modulation state, the spectral modulation state is periodically varied a plurality of times and during each spectral modulation period (τ_{λ}) a plurality of successive intensity measurements are performed.

2. The method according to claim 1,
**characterized in that**
the intensity measurements performed during each spectral modulation period (τ_{λ}) immediately follow each other.

3. The method according to one of the preceding claims,
**characterized in that**
the integration time underlying each intensity measurement is controlled as a function of the wavelength chosen in each case.

4. The method according to one of the claims 1 to 2,
**characterized in that**
the integration time underlying each intensity measurement is constant.

5. The method according to one of the preceding claims,
**characterized in that**
the variation of the wavelength within each spectral modulation period (τ_{λ}) is monotonic, in particular linear.

6. The method according to one of the preceding claims,
**characterized in that**
the time period (τ_{RC}) over which the monotonic variation of the polarization modulation state occurs corresponds to an integer multiple of the spectral modulation period (τ_{λ}).

7. The method according to one of the preceding claims,
**characterized in that**
the polarization modulation, the spectral modulation and the intensity measurements are mechatronically synchronized.

8. The method according to any one of the preceding claims,
**characterized in that**
a polarization adjustment value representative of the respectively set polarization modulation state and/or a spectral adjustment value representative of the respectively set spectral modulation state are measured continuously and converted into the polarization values or spectral values, respectively, that are associated with the intensity values to be stored together with them.

9. The method according to one of the preceding claims,
**characterized in that**
the polarization modulation is carried out by means of a polarization modulator which is arranged in the optical path in front of or behind the sample (16) and can be adjusted by a first servomotor.

10. The method according to claim 9,
**characterized in that**
the polarization modulator is formed as a pair of a polarizer (22) and a compensator (24) positioned in the optical path between the light source and the sample, the compensator being rotatable by the first servomotor.

11. The method according to claim 8 and any one of claims 9 to 10,
**characterized in that**
the polarization adjustment value is a position value representative of the position of the first servomotor.

12. The method according to one of the preceding claims,
**characterized in that**
the spectral modulation is carried out by means of a spectral modulator which is arranged in the optical path in front of or behind the sample and is adjustable by a second servomotor.

13. The method according to claim 12, in so far as related back to claim 8, **characterized in that**
the spectral adjustment value is a position value representative of the position of the second servomotor.

14. A polarization measuring device (10) comprising
- a light source (12) for generating light (16) intended to interact with a sample (16),
- a sample holder for positioning the sample (16) in the optical path of the light (14),
- an intensity detector (20) for detecting an intensity of the light (14) after its interaction with the sample (16),
- a polarization state generator disposed between the light source (12) and the sample (14) and adapted to provide a predetermined input polarization state to the light (14),
- a polarization-sensitive analyzer (28) disposed between the sample (16) and the intensity detector (20) and adapted to select light components of predetermined polarization states,
- a spectral modulator (30) adapted to vary the wavelength of the light (14) reaching the detector (20),
- a polarization modulator (24) adapted to vary a relative angle between the output polarization state of the light (14) emanating from the sample (16) and the analyzer (28), and
- a control unit adapted to drive the intensity detector (20), the polarization modulator (24), and the spectral modulator (30) according to a predetermined operating procedure,
**characterized in that**
the control unit is arranged to control the intensity detector (20), the polarization modulator (24) and the spectral modulator (30) according to the method according to any one of claims 1 to 11.

## Revendications

1. Procédé de fonctionnement d'un dispositif de mesure de polarisation (10), dans lequel une lumière (14) ayant un état de polarisation d'entrée prédéterminé est dirigée vers un échantillon (16) et à partir de celui-ci à travers un analyseur sélectif de polarisation (28) et au moins en partie vers un détecteur d'intensité (20) dans le but d'une interaction potentiellement modificatrice de polarisation avec l'échantillon, où
- dans le cadre d'une modulation de polarisation, un angle relatif entre l'état de polarisation initial de la lumière (14) quittant l'échantillon (14) et l'analyseur (28) est varié, et
- dans le cadre d'une modulation spectrale, la longueur d'onde de la lumière (14) parvenant au détecteur d'intensité (20) est variée,
où, au moyen du détecteur d'intensité (20), on effectue successivement une pluralité de mesures d'intensité pour différentes constellations d'états de polarisation et de modulation spectrale et on mémorise des valeurs d'intensité correspondantes conjointement avec des valeurs de polarisation et des valeurs spectrales représentant la constellation correspondante,
**caractérisé**
**en ce que** la modulation de polarisation et la modulation spectrale sont effectuées simultanément et en continu, l'état de modulation spectrale étant modifié périodiquement à plusieurs reprises pendant une variation unique et monotone de l'état de modulation de polarisation, et une pluralité de mesures d'intensité étant effectuées successivement pendant chaque période de modulation spectrale (τ_{λ}).

2. Procédé selon la revendication 1,
**caractérisé**
**en ce que** les mesures d'intensité effectuées pendant chaque période de modulation spectrale (τ_{λ}) se succèdent immédiatement.

3. Procédé selon l'une des revendications précédentes,
**caractérisé en**
**ce que** le temps d'intégration à la base de chaque mesure d'intensité est commandé en fonction de la longueur d'onde respectivement réglée.

4. Procédé selon l'une des revendications 1 à 2,
**caractérisé**
**en ce que** le temps d'intégration à la base de chaque mesure d'intensité est constant.

5. Procédé selon l'une des revendications précédentes,
**caractérisé**
**en ce que** la variation de la longueur d'onde au-dedans de chaque période de modulation spectrale (τ_{λ}) est monotone, en particulier linéaire.

6. Procédé selon l'une des revendications précédentes,
**caractérisé**
**en ce que** la période (τ_{RC}) sur laquelle s'effectue la variation monotone de l'état de modulation de polarisation correspond à un multiple entier de la période de modulation spectrale (τ_{λ}).

7. Procédé selon l'une des revendications précédentes,
**caractérisé**
**en ce que** la modulation de polarisation, la modulation spectrale et les mesures d'intensité sont synchronisées de manière mécatronique.

8. Procédé selon l'une des revendications précédentes,
**caractérisé**
**en ce qu'**une valeur de réglage de polarisation représentative de l'état de modulation de polarisation respectivement réglé et/ou une valeur de réglage spectrale représentative de l'état de modulation spectrale respectivement réglé sont mesurées en continu et converties en les valeurs de polarisation ou les valeurs spectrales respectivement associées aux mesures d'intensité et à mémoriser avec celles-ci.

9. Procédé selon l'une des revendications précédentes,
**caractérisé**
**en ce que** la modulation de polarisation est effectuée au moyen d'un modulateur de polarisation qui est disposé dans le trajet du faisceau devant ou derrière l'échantillon (14) et qui est réglable par un premier servomoteur.

10. Procédé selon la revendication 9,
**caractérisé**
**en ce que** le modulateur de polarisation est réalisé sous la forme d'une paire composée d'un polariseur (22) et d'un compensateur (24) pouvant être mis en rotation par le premier servomoteur, positionnée dans le trajet optique entre la source de lumière et l'échantillon.

11. Procédé selon la revendication 8 et l'une des revendications 9 à 10,
**caractérisé**
**en ce que** la valeur de réglage de la polarisation est une valeur de position représentative de la position du premier servomoteur.

12. Procédé selon l'une des revendications précédentes,
**caractérisé**
**en ce que** la modulation spectrale est effectuée au moyen d'un modulateur spectral qui est disposé dans le trajet optique devant ou derrière l'échantillon et qui est réglable par un deuxième servomoteur.

13. Procédé selon la revendication 12, dans la mesure où il se rapporte à la revendication 8,
**caractérisé**
**en ce que** la valeur de réglage spectrale est une valeur de position représentative de la position du deuxième servomoteur.

14. Dispositif de mesure de la polarisation (10), comprenant
- une source de lumière (12) pour générer une lumière (16) destinée à interagir avec un échantillon (16),
- un porte-échantillon pour positionner l'échantillon (16) dans le trajet optique de la lumière (14),
- un détecteur d'intensité (20) pour détecter une intensité de la lumière (14) après son interaction avec l'échantillon (16),
- un générateur d'état de polarisation qui est disposé entre la source de lumière (12) et l'échantillon (14) et qui est apte à donner à la lumière (14) un état de polarisation d'entrée prédéterminé,
- un analyseur (28) sensible à la polarisation, qui est disposé entre l'échantillon (16) et le détecteur d'intensité (20) et qui est apte à sélectionner des composantes de lumière d'états de polarisation prédéterminés,
- un modulateur spectral (30) apte à faire varier la longueur d'onde de la lumière (14) parvenant au détecteur (20),
- un modulateur de polarisation (24) adapté pour faire varier un angle relatif entre l'état de polarisation de sortie de la lumière (14) quittant l'échantillon (16) et l'analyseur (28), et
- une unité de commande adaptée pour commander le détecteur d'intensité (20), le modulateur de polarisation (24) et le modulateur spectral (30) selon une procédure de fonctionnement prédéterminée,
**caractérisé**
**en ce que** l'unité de commande est agencée pour commander le détecteur d'intensité (20), le modulateur de polarisation (24) et le modulateur spectral (30) selon le procédé selon l'une des revendications 1 à 11.
